# EUROPEAN PATENT SPECIFICATION

(11) **EP 3 883 229 B1**
(45) Date of publication and mention of the grant of the patent: **30.08.2023**
(21) Application number: 18944160.3
(22) Date of filing: 25.12.2018
(51) Int. Cl.: H04M 1/02, G06F 1/16, H04N 23/51, H04N 23/57

(54) **CAMERA MODULE AND TERMINAL DEVICE**
KAMERAMODUL UND ENDGERÄTEVORRICHTUNG
MODULE D'APPAREIL PHOTO ET DISPOSITIF TERMINAL

(43) Date of publication of application: 22.09.2021
(73) Proprietor: Huawei Technologies Co., Ltd., Longgang District Shenzhen, Guangdong 518129 (CN)
(72) Inventor: XIA, Honghua, Shenzhen, Guangdong 518129 (CN); YUAN, Danhui, Shenzhen, Guangdong 518129 (CN); WANG, Wenbing, Shenzhen, Guangdong 518129 (CN); HE, Yanguo, Shenzhen, Guangdong 518129 (CN); SUN, Lue, Shenzhen, Guangdong 518129 (CN); YUAN, Lei, Shenzhen, Guangdong 518129 (CN)
(74) Representative: Thun, Clemens
(86) International application number: PCT/CN2018/123562
(87) International publication number: WO 2020/132879

(56) References cited:
- CN-U- 207 926 665
- US-A1- 2007 253 703
- US-A1- 2013 163 170
- US-A1- 2016 205 293

## Description

### TECHNICAL FIELD

Embodiments of this application relate to the field of terminal devices, and more specifically, to a camera assembly and a terminal device.

### BACKGROUND

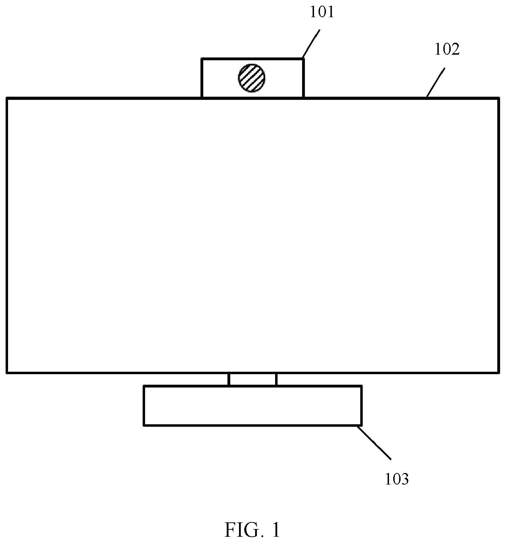

With development of large-screen devices, adding cameras to the large-screen devices has become a development trend. In the industry, cameras have been added to large-screen devices such as smart televisions, notebook computers, and displays. For example, FIG. 1 is a schematic diagram of a display in the prior art. The display includes a camera 101, a display screen 102, and a bracket 103. The camera 101 is fastened on an upper surface of the display screen 102.

Currently, all cameras on the market are directly fastened to large-screen devices through plugging or the like. Therefore, a location of a camera on a large-screen device cannot be changed, and therefore a shooting angle of the camera cannot be changed. In addition, when a user is not using the camera, the camera is still exposed outside the large-screen device. This results in unappealing appearance, and the camera is also easily damaged.

US 2016/0205293 A1 describes a display device including a camera module. The display device includes a display panel, a case member disposed on a back surface of the display panel, and a camera module disposed on a back surface of the case member. When a predetermined pressure is applied to an upper part of the camera module, the camera module is configured to rise by a predetermined height and then rotate at a predetermined angle.

### SUMMARY

Embodiments of this application provide a camera assembly and a terminal device. According to the camera assembly provided in this application, a camera can be built in a terminal device, and a shooting angle of the camera can also be adjusted.

The embodiments of this application are implemented as follows:

According to a first aspect, an embodiment of this application provides a camera assembly. The camera assembly is applied to a terminal device. The camera assembly includes a transmission mechanism, a base, a rear housing, and a guide ring. A first end of the base is connected to the transmission mechanism. A second end of the base is hinged to the rear housing. The rear housing has space for accommodating a camera. At least two guide slots are disposed on the rear housing. The at least two guide slots are connected to each other. An included angle is formed between two adjacent guide slots in the at least two guide slots. A fixing part and a guide post are disposed on the guide ring. The fixing part is configured to fasten the guide ring to the terminal device. The guide post adapts to the at least two guide slots. The transmission mechanism is able to drive the base and the rear housing to move relative to the guide ring, so that the rear housing protrudes out of the terminal device or retracts into the terminal device. In a process in which the rear housing protrudes out of the terminal device, the guide post of the guide ring moves from the first guide slot of the rear housing to the second guide slot of the rear housing, so that a movement direction of the rear housing is offset by a preset included angle, thereby changing a shooting angle of a camera disposed in the rear housing.

So in the first aspect, according to the invention, when the camera in the rear housing needs to be used, the transmission mechanism drives the base and the rear housing to move relative to the guide ring, so that the rear housing protrudes out of the terminal device. In a process in which the rear housing protrudes out of the terminal device, the guide post of the guide ring moves on the at least two guide slots of the rear housing, so that a movement direction of the rear housing is offset by a preset included angle. Therefore, a shooting angle of the camera disposed in the rear housing also changes, and the shooting angle of the camera is adjusted. When the camera in the rear housing is not used, the transmission mechanism drives the base and the rear housing to move relative to the guide ring and retract into the terminal device, thereby protecting the camera.

In a possible implementation, the camera assembly further includes a protection box. The protection box is fastened to the terminal device. The transmission mechanism, the base, the rear housing, and the guide ring are all disposed in the protection box. An opening is disposed on a first side of the protection box. When the at least two guide slots of the rear housing and the guide post of the guide ring move oppositely in a first direction, the rear housing protrudes out of the protection box through the opening on the first side of the protection box. When the at least two guide slots of the rear housing and the guide post of the guide ring move oppositely in a second direction, the rear housing enters the protection box through the opening on the first side of the protection box.

In a possible implementation, the camera assembly further includes a limiting part. The limiting part is fastened to the terminal device. A limiting guide rail is disposed on the base. The limiting part adapts to the limiting guide rail on the base.

In a possible implementation, a sealing ring is disposed on an outer side of the guide ring.

In a possible implementation, the transmission mechanism includes a motor, a gear assembly, a screw rod, and a transmission rod. A rotating shaft of the motor is connected to a first end of the screw rod by using the gear assembly. A threaded guide rail is disposed on the screw rod. A threaded slider is disposed at a first end of the transmission rod. The threaded slider at the first end of the transmission rod adapts to the threaded guide rail on the screw rod. A second end of the transmission rod is fixedly connected to the first end of the base.

In a possible implementation, the gear assembly includes a first gear and a second gear. The first gear is disposed on the rotating shaft of the motor. The second gear is disposed at the first end of the screw rod. The first gear is meshed with the second gear.

In a possible implementation, the transmission mechanism further includes a limiting shaft and a bracket. The bracket is fastened to the terminal device. The limiting shaft is fastened to the bracket. A limiting hole is disposed on the transmission rod. The limiting shaft is located in the limiting hole of the transmission rod.

In a possible implementation, the at least two guide slots form an arc-shaped guide slot.

In a possible implementation, a quantity of the at least two guide slots is 2, the at least two guide slots include a first guide slot and a second guide slot, and a preset included angle is formed between the first guide slot and the second guide slot. The guide post of the guide ring slides from the first guide slot to the second guide slot. A movement direction of the rear housing changes from a third direction to a fourth direction. A preset included angle is formed between the third direction and the fourth direction.

According to a second aspect, an embodiment of this application provides a terminal device. The terminal device includes the camera assembly disclosed in any one of the first aspect or the possible implementations of the first aspect.

### BRIEF DESCRIPTION OF DRAWINGS

FIG. 1 is a schematic diagram of a display in the prior art;
FIG. 2 is a schematic diagram of a camera assembly according to an embodiment of this application;
FIG. 3 is an exploded view of components in an area A in FIG. 2 according to an embodiment of this application;
FIG. 4 is a cross-sectional view of a rear housing 2 in FIG. 3 according to an embodiment of this application;
FIG. 5 is a cross-sectional view of a rear housing 200 with three guide slots according to an embodiment of this application;
FIG. 6 is a schematic diagram of states of a camera assembly according to an embodiment of this application;
FIG. 7 is a schematic diagram of another camera assembly according to an embodiment of this application;
FIG. 8 is a schematic diagram of still another camera assembly according to an embodiment of this application;
FIG. 9 is a schematic diagram of a transmission mechanism according to an embodiment of this application;
FIG. 10 is a schematic diagram of components in an area B in FIG. 9 according to an embodiment of this application;
FIG. 11 is a schematic diagram of a terminal device 1001 according to an embodiment of this application; and
FIG. 12 is a schematic diagram of another terminal device 1002 according to an embodiment of this application.

### DESCRIPTION OF EMBODIMENTS

The following describes the technical solutions in the embodiments of this application with reference to the accompanying drawings in the embodiments of this application.

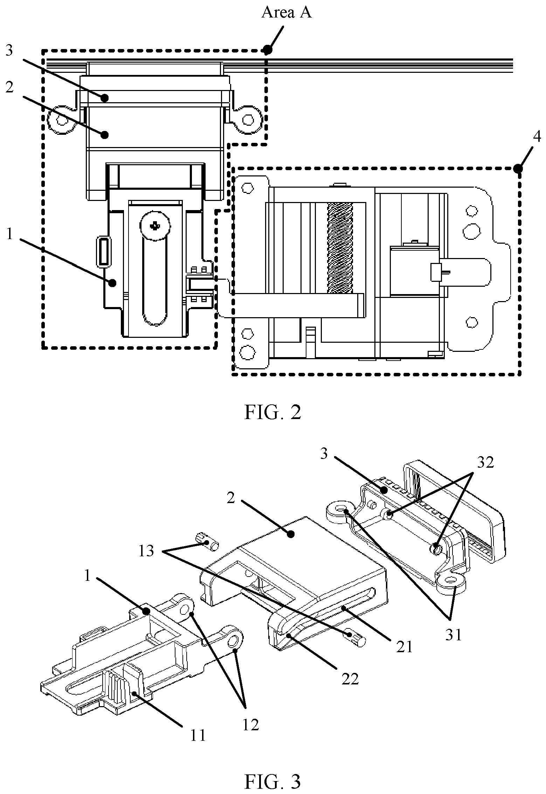

FIG. 2 is a schematic diagram of a camera assembly according to an embodiment of this application. FIG. 3 is an exploded view of components in an area A in FIG. 2 according to an embodiment of this application.

The camera assembly shown in FIG. 2 may be applied to a terminal device. The terminal device may be a large-screen device, a small-screen device, or a screenless device. For example, the large-screen device may be a smart television, a display, a notebook computer, or another device; the small-screen device may be a smartphone, a tablet computer, or another device; and the screenless device may be a smart camera or another device. Certainly, the terminal device is not limited to the large-screen device, the small-screen device, or the screenless device, and the camera assembly provided in this embodiment of this application may be used for any device on which a camera is installed.

In the embodiments shown in FIG. 2 and FIG. 3, the camera assembly includes a base 1, a rear housing 2, a guide ring 3, and a transmission mechanism 4. A first end 11 of the base 1 is connected to the transmission mechanism 4. A second end 12 of the base 1 is hinged to the rear housing 2 by using a pin 13. The rear housing 2 has space for accommodating a camera. A first guide slot 21 and a second guide slot 22 are disposed on the rear housing 2. The first guide slot 21 and the second guide slot 22 are connected to each other. A preset included angle is formed between the first guide slot 21 and the second guide slot 22. A fixing part 31 and a guide post 32 are disposed on the guide ring 3. The fixing part 31 is configured to fasten the guide ring 3 to the terminal device. The guide post 32 adapts to the first guide slot 21 and the second guide slot 22.

In the embodiments shown in FIG. 2 and FIG. 3, when the camera in the rear housing 2 needs to be used, the transmission mechanism 4 drives the base 1 and the rear housing 2 to move relative to the guide ring 3, so that the rear housing 2 protrudes out of the terminal device. In a process in which the rear housing 2 protrudes out of the terminal device, the guide post 32 of the guide ring 3 moves from the first guide slot 21 of the rear housing 2 to the second guide slot 22 of the rear housing 2, so that a movement direction of the rear housing 2 is offset by a preset included angle. Therefore, a shooting angle of the camera disposed in the rear housing 2 also changes, and the shooting angle of the camera is adjusted. When the camera in the rear housing 2 is not used, the transmission mechanism 4 drives the base 1 and the rear housing 2 to move relative to the guide ring 3 and retract into the terminal device, thereby protecting the camera.

Referring to FIG. 2, FIG. 3, and FIG. 4, FIG. 4 is a cross-sectional view of the rear housing 2 in FIG. 3 according to an embodiment of this application. The preset included angle formed between the first guide slot 21 and the second guide slot 22 of the rear housing 2 is equivalent to a rotation angle of the rear housing 2 relative to the second end 12 of the base 1. The preset included angle formed between the first guide slot 21 and the second guide slot 22 is also equivalent to an adjustable shooting angle of the camera built in the rear housing 2. For example, assuming that the preset included angle formed between the first guide slot 21 and the second guide slot 22 is 120 degrees, the rotation angle of the rear housing 2 relative to the second end 12 of the base 1 is 120 degrees, and the adjustable shooting angle of the camera built in the rear housing 2 is 120 degrees. Certainly, the preset included angle formed between the first guide slot 21 and the second guide slot 22 of the rear housing 2 may be set based on an actual situation, and is not limited to the angle provided in this embodiment of this application.

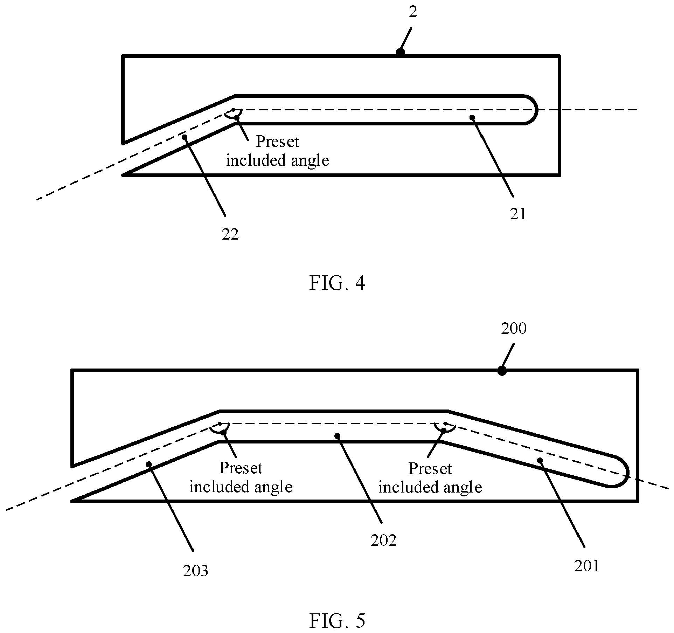

FIG. 5 is a cross-sectional view of a rear housing 200 with three guide slots according to an embodiment of this application. A first guide slot 201, a second guide slot 202, and a third guide slot 203 are disposed on the rear housing 200 shown in FIG. 5. The first guide slot 201 and the second guide slot 202 are connected to each other. The second guide slot 202 and the third guide slot 203 are connected to each other. A preset included angle is formed between the first guide slot 201 and the second guide slot 202. A preset included angle is formed between the second guide slot 202 and the third guide slot 203. When a guide post of a guide ring slides from the first guide slot 201 to the second guide slot 202, a shooting angle of a camera in the rear housing 200 may change once. When the guide post of the guide ring slides from the second guide slot 202 to the third guide slot 203, the shooting angle of the camera in the rear housing 200 may change again. To sum up, there is a correspondence between a quantity of guide slots on the rear housing and a quantity of changes of the shooting angle of the camera in the rear housing. Assuming that the quantity of guide slots on the rear housing is n, the quantity of changes of the shooting angle of the camera in the rear housing is n-1, where n is greater than or equal to 2. Certainly, the quantity of guide slots that are disposed on the rear housing and that are connected to each other is not limited to two or three provided in this embodiment of this application, but may be alternatively more than three. In addition, the included angle between the first guide slot 201 and the second guide slot 202 may be different from the included angle between the second guide slot 202 and the third guide slot 203.

In addition, a plurality of guide slots of the rear housing may form an arc-shaped guide slot, so that when the guide post of the guide ring slides in the plurality of guide slots of the rear housing, a movement direction of the rear housing always changes. In this way, the shooting angle of the camera in the rear housing changes with the movement direction of the rear housing, so that the shooting angle of the camera can also be adjusted.

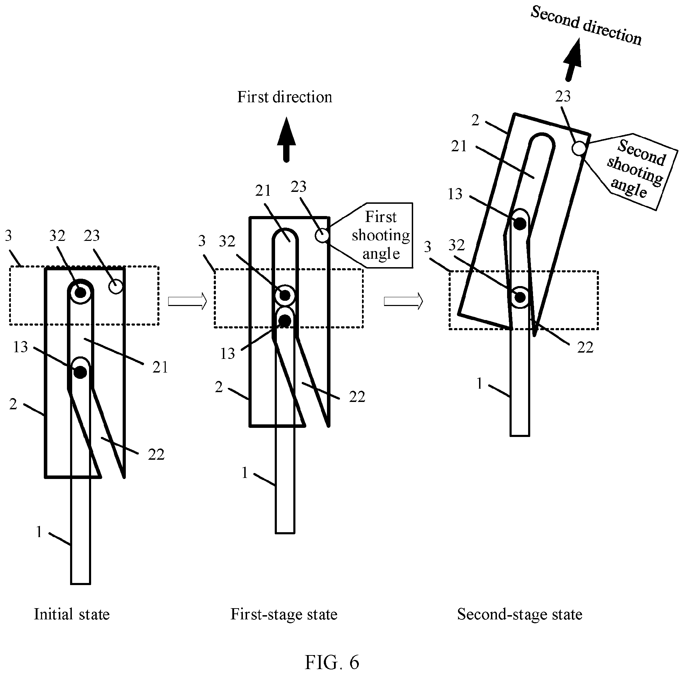

FIG. 6 is a schematic diagram of states of a camera assembly according to an embodiment of this application. FIG. 6 shows three states of the camera assembly: The camera assembly is in an initial state, the camera assembly is in a first-stage state, and the camera assembly is in a second-stage state.

When the camera assembly is in the initial state, a guide post 32 of a guide ring 3 is located at a first end of a first guide slot 21 of a rear housing 2, and a camera 23 in the rear housing 2 is hidden in the guide ring 3.

When the camera assembly is in the first-stage state, the guide post 32 of the guide ring 3 moves from the first end of the first guide slot 21 to a second end of the first guide slot 21, the guide post 32 of the guide ring 3 gradually approaches a first end of the second guide slot 22 of the rear housing 2, the rear housing 2 gradually protrudes out of the guide ring 3 along a first direction, and the camera 23 in the rear housing 2 is at a first shooting angle.

When the camera assembly is in the second-stage state, the guide post 32 of the guide ring 3 moves from the second end of the first guide slot 21 to the first end of the second guide slot 22, the guide post 32 of the guide ring 3 gradually approaches a second end of the second guide slot 22 of the rear housing 2, the rear housing 2 rotates relative to the base 1 by using the pin 13 as a rotation axis, the rear housing 2 gradually protrudes out of the guide ring 3 in a second direction, and the camera 23 in the rear housing 2 is at a second shooting angle.

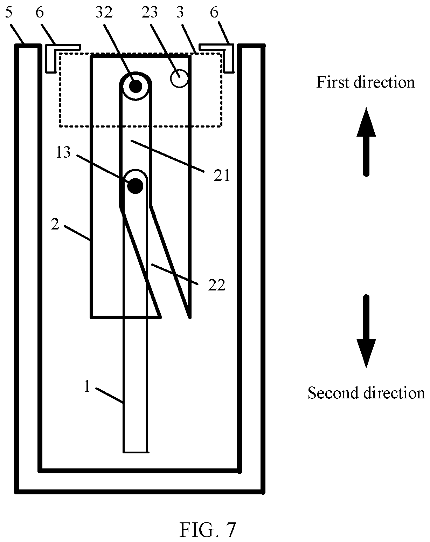

FIG. 7 is a schematic diagram of another camera assembly according to an embodiment of this application. Compared with the camera assembly shown in FIG. 2, a protection box 5 and a sealing ring 6 are added to the camera assembly shown in FIG. 7. The protection box 5 is fastened to a terminal device, and the sealing ring 6 is disposed on an outer side of a guide ring 3. A transmission mechanism (not shown in the figure), a base 1, a rear housing 2, and the guide ring 3 are all disposed in the protection box 5. An opening is disposed on a first side of the protection box 5. When a first guide slot 21 and a second guide slot 22 of the rear housing 2 move relative to a guide post 32 of the guide ring 3 in a first direction, the rear housing 2 protrudes out of the protection box 5 through the opening on the first side of the protection box 5. When the first guide slot 21 and the second guide slot 22 of the rear housing 2 move relative to the guide post 32 of the guide ring 3 in a second direction, the rear housing 2 enters the protection box 5 through the opening on the first side of the protection box 5.

In the embodiment shown in FIG. 7, the protection box 5 can effectively protect components such as the transmission mechanism, the base 1, the rear housing 2, the camera 23 disposed in the rear housing 2, and the guide ring 3. The sealing ring 6 can effectively prevent external dust and the like from entering the protection box 5.

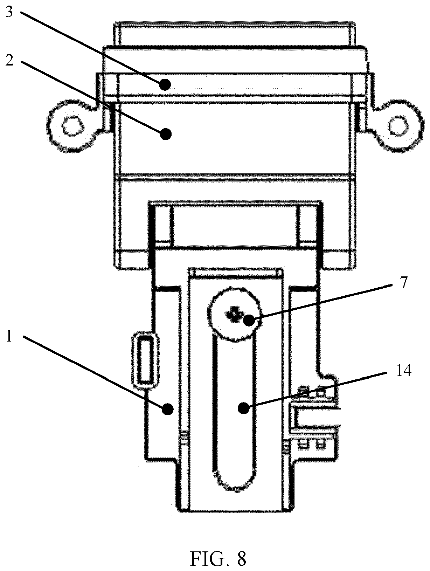

FIG. 8 is a schematic diagram of still another camera assembly according to an embodiment of this application. Compared with the camera assembly shown in FIG. 2, a limiting part 7 is added to the camera assembly shown in FIG. 8. The limiting part 7 is fastened to a terminal device. A limiting guide rail 14 is disposed on a base 1. The limiting part 7 adapts to the limiting guide rail 14 on the base 1. When a transmission mechanism (not shown in the figure) of the camera assembly drives the base 1 to move, the limiting part 7 fastened to the terminal device slides on the limiting guide rail 14 of the base 1. The limiting part 14 can ensure that the base 1 moves on a predetermined track without deviation.

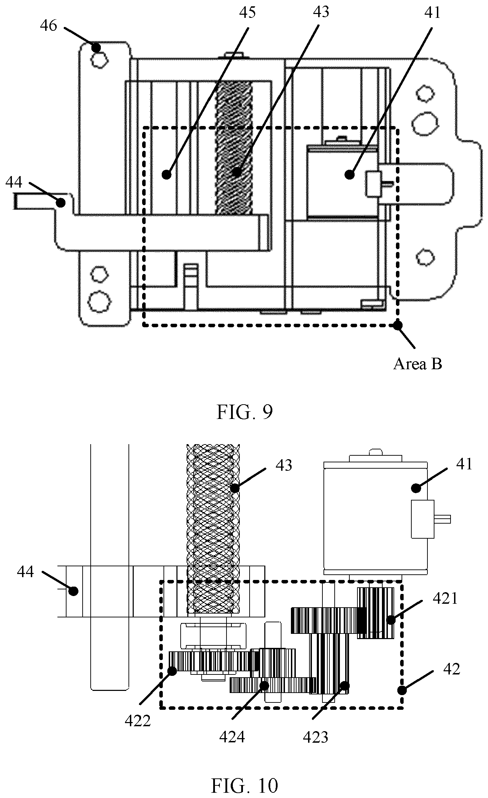

FIG. 9 is a schematic diagram of a transmission mechanism according to an embodiment of this application. FIG. 10 is a schematic diagram of components in an area B in FIG. 9 according to an embodiment of this application. The transmission mechanism includes a motor 41, a gear assembly 42, a screw rod 43, a transmission rod 44, a limiting shaft 45, and a bracket 46. A rotating shaft of the motor 41 is connected to a first end of the screw rod 43 by using the gear assembly 42. A threaded guide rail is disposed on the screw rod 43. A threaded slider is disposed at a first end of the transmission rod 44. The threaded slider at the first end of the transmission rod 44 adapts to the threaded guide rail on the screw rod 43. A second end of the transmission rod 44 is fixedly connected to a first end of a base (not shown in the figure).

In the embodiments shown in FIG. 9 and FIG. 10, when the motor 41 receives an electrical signal, the motor 41 starts to rotate, thereby driving a gear in the gear assembly 42 to rotate, and the gear assembly 42 drives the screw rod 43 to rotate. After the screw rod 43 rotates, the threaded slider on the transmission rod 44 slides on the threaded guide rail of the screw rod 43, thereby driving the transmission rod 44 to move, and the transmission rod 44 drives the base (not shown in the figure) to move.

In the embodiments shown in FIG. 9 and FIG. 10, the bracket 46 is fastened to a terminal device, the limiting shaft 45 is fastened to the bracket 46, a limiting hole is disposed on the transmission rod 44, and the limiting shaft 45 is located in the limiting hole of the transmission rod 44. During the movement of the transmission rod 44, the movement of the transmission rod 44 is always limited within a predetermined track by the limiting shaft 45 without deviation.

In the embodiments shown in FIG. 9 and FIG. 10, the gear assembly 42 includes a first gear 421, a second gear 422, a third gear 423, and a fourth gear 424. The first gear 421 is disposed on the rotating shaft of the motor 41. The second gear 422 is disposed at the first end of the screw rod 43. The first gear 421 is meshed with the third gear 423. The third gear 423 is meshed with the fourth gear 424. The fourth gear 424 is meshed with the second gear 422.

Certainly, a quantity of gears in the gear assembly 42 may be set based on an actual situation. For example, the gear assembly 42 may alternatively include only the first gear 421 disposed on the rotating shaft of the motor 41 and the second gear 422 disposed at the first end of the screw rod 43, and the first gear 421 is meshed with the second gear 422. For another example, the gear assembly 42 may alternatively include more gears based on an actual situation.

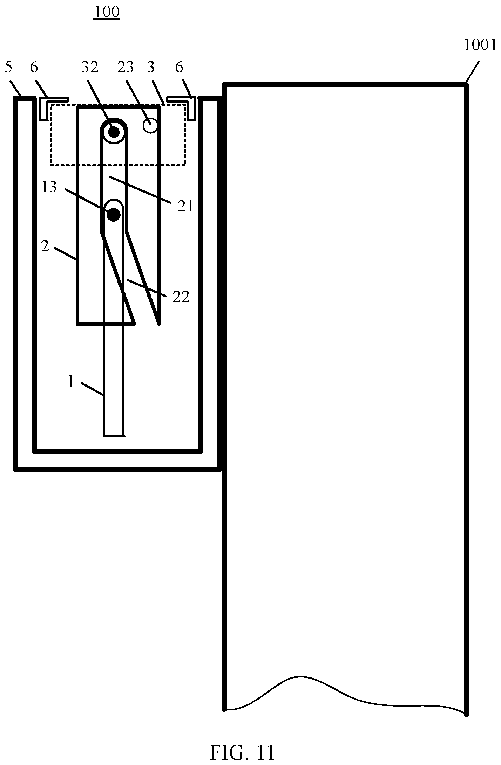

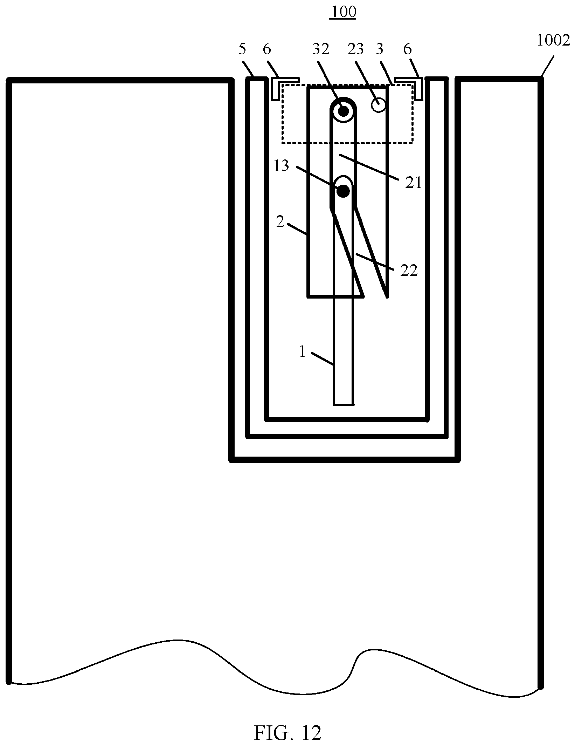

FIG. 11 is a schematic diagram of a terminal device 1001 according to an embodiment of this application. FIG. 12 is a schematic diagram of another terminal device 1002 according to an embodiment of this application.

In the embodiment shown in FIG. 11, the terminal device 1001 includes a camera assembly 100. For detailed descriptions of the camera assembly 100, refer to the detailed descriptions of the camera assembly shown in FIG. 2, FIG. 3, FIG. 6, FIG. 7, FIG. 8, FIG. 9, and FIG. 10. In FIG. 11, the camera assembly 100 is disposed outside the terminal device 1001.

In the embodiment shown in FIG. 12, the terminal device 1002 includes a camera assembly 100. For detailed descriptions of the camera assembly 100, refer to the detailed descriptions of the camera assembly shown in FIG. 2, FIG. 3, FIG. 6, FIG. 7, FIG. 8, FIG. 9, and FIG. 10. In FIG. 12, the camera assembly 100 is disposed inside the terminal device 1002.

## Claims

1. A camera assembly, wherein the camera assembly is applied to a terminal device, and the camera assembly comprises a transmission mechanism (4), a base (1), a rear housing (2), and a guide ring (3);
a first end (11) of the base (1) is connected to the transmission mechanism (4), and a second end (12) of the base (1) is hinged to the rear housing (2);
the rear housing (2) has space for accommodating a camera, at least two guide slots (21, 22) are disposed on the rear housing (2), the at least two guide slots are connected to each other, and an included angle is formed between two adjacent guide slots in the at least two guide slots; and
a fixing part (31) and a guide post (32) are disposed on the guide ring (3), the fixing part (31) is configured to fasten the guide ring (3) to the terminal device, and the guide post (32) adapts to the at least two guide slots,
wherein the transmission mechanism (4) is able to drive the base (1) and the rear housing (2) to move relative to the guide ring (3), so that the rear housing (2) protrudes out of the terminal device or retracts into the terminal device,
wherein in a process in which the rear housing (2) protrudes out of the terminal device, the guide post (32) of the guide ring (3) moves from the first guide slot (21) of the rear housing (2) to the second guide slot (22) of the rear housing (2), so that a movement direction of the rear housing (2) is offset by a preset included angle, thereby changing a shooting angle of a camera disposed in the rear housing (2).

2. The camera assembly according to claim 1, wherein the camera assembly further comprises a protection box (5), and the protection box (5) is fastened to the terminal device;
the transmission mechanism (4), the base (1), the rear housing (2), and the guide ring (3) are all disposed in the protection box (5);
an opening is disposed on a first side of the protection box (5);
when the at least two guide slots of the rear housing and the guide post (32) of the guide ring (3) move oppositely in a first direction, the rear housing (2) protrudes out of the protection box (5) through the opening on the first side of the protection box (5); and
when the at least two guide slots of the rear housing (2) and the guide post (32) of the guide ring (3) move oppositely in a second direction, the rear housing (2) enters the protection box (5) through the opening on the first side of the protection box (5).

3. The camera assembly according to claim 1 or 2, wherein the camera assembly further comprises a limiting part (7), and the limiting part (7) is fastened to the terminal device; and
a limiting guide rail (14) is disposed on the base (1), and the limiting part (7) adapts to the limiting guide rail (14) on the base (1).

4. The camera assembly according to any claim 1 to 3, wherein a sealing ring (6) is disposed on an outer side of the guide ring (3).

5. The camera assembly according to any claim 1 to 4, wherein the transmission mechanism comprises a motor (41), a gear assembly (42), a screw rod (43), and a transmission rod (44);
a rotating shaft of the motor (41) is connected to a first end of the screw rod (43) by using the gear assembly (42);
a threaded guide rail is disposed on the screw rod (43);
a threaded slider is disposed at a first end of the transmission rod; and
the threaded slider at the first end of the transmission rod (44) adapts to the threaded guide rail on the screw rod (43), and a second end of the transmission rod is fixedly connected to the first end of the base (1).

6. The camera assembly according to claim 5, wherein the gear assembly (42) comprises a first gear (421) and a second gear (422); and
the first gear (421) is disposed on the rotating shaft of the motor (41), the second gear (422) is disposed at the first end of the screw rod (43), and the first gear (421) is meshed with the second gear (422).

7. The camera assembly according to claim 5 or 6, wherein the transmission mechanism (4) further comprises a limiting shaft (45) and a bracket (46);
the bracket (46) is fastened to the terminal device, and the limiting shaft (45) is fastened to the bracket (46); and
a limiting hole is disposed on the transmission rod (44), and the limiting shaft is located in the limiting hole of the transmission rod (44).

8. The camera assembly according to any claim 1 to 7, wherein the at least two guide slots form an arc-shaped guide slot.

9. The camera assembly according to any claim 1 to 8, wherein a quantity of the at least two guide slots is 2, the at least two guide slots comprise a first guide slot (21) and a second guide slot (22), and the included angle is formed between the first guide slot (21) and the second guide slot (22); and
the guide post (32) of the guide ring (3) slides from the first guide slot (21) to the second guide slot (22), a movement direction of the rear housing (2) changes from a third direction to a fourth direction, and a preset included angle is formed between the third direction and the fourth direction.

10. A terminal device, comprising the camera assembly according to any one of claims 1 to 9.

## Patentansprüche

1. Kameraanordnung, wobei die Kameraanordnung auf ein Endgerät angewendet wird und die Kameraanordnung einen Übertragungsmechanismus (4), eine Basis (1), ein hinteres Gehäuse (2) und einen Führungsring (3) umfasst;
ein erstes Ende (11) der Basis (1) mit dem Übertragungsmechanismus (4) verbunden ist und ein zweites Ende (12) der Basis (1) an dem hinteren Gehäuse (2) eingehängt ist;
das hintere Gehäuse (2) einen Raum zum Unterbringen einer Kamera aufweist, wobei mindestens zwei Führungsschlitze (21, 22) auf dem hinteren Gehäuse (2) arrangiert sind, die mindestens zwei Führungsschlitze miteinander verbunden sind, und ein eingeschlossener Winkel zwischen zwei angrenzenden Führungsschlitzen in den mindestens zwei Führungsschlitzen ausgebildet ist; und
ein Fixierteil (31) und ein Führungspfosten (32) auf dem Führungsring (3) arrangiert sind, wobei das Fixierteil (31) konfiguriert ist, um den Führungsring (3) an dem Endgerät zu befestigen, und der Führungspfosten (32) sich an die mindestens zwei Führungsschlitze anpasst,
wobei der Übertragungsmechanismus (4) in der Lage ist, die Basis (1) und das hintere Gehäuse (2) so anzutreiben, dass sie sich relativ zu dem Führungsring (3) bewegen, sodass das hintere Gehäuse (2) aus dem Endgerät hervorsteht oder sich in das Endgerät zurückzieht,
wobei in einem Verfahren, in dem das hintere Gehäuse (2) aus dem Endgerät hervorsteht, der Führungspfosten (32) des Führungsrings (3) sich von dem ersten Führungsschlitz (21) des hinteren Gehäuses (2) zu dem zweiten Führungsschlitz (22) des hinteren Gehäuses (2) bewegt, sodass eine Bewegungsrichtung des hinteren Gehäuses (2) um einen voreingestellten eingeschlossenen Winkel versetzt ist, wobei dadurch ein Aufnahmewinkel einer Kamera, die in dem hinteren Gehäuse (2) arrangiert ist, geändert wird.

2. Kameraanordnung nach Anspruch 1, wobei die Kameraanordnung ferner einen Schutzkasten (5) umfasst und der Schutzkasten (5) an dem Endgerät befestigt ist;
der Übertragungsmechanismus (4), die Basis (1), das hintere Gehäuse (2) und der Führungsring (3) alle in dem Schutzkasten (5) arrangiert sind;
eine Öffnung auf einer ersten Seite des Schutzkastens (5) arrangiert ist;
wenn die mindestens zwei Führungsschlitze des hinteren Gehäuses und der Führungspfosten (32) des Führungsrings (3) sich in einer ersten Richtung entgegengesetzt bewegen, das hintere Gehäuse (2) aus dem Schutzkasten (5) durch die Öffnung auf der ersten Seite des Schutzkastens (5) hervorsteht; und
wenn die mindestens zwei Führungsschlitze des hinteren Gehäuses (2) und der Führungspfosten (32) des Führungsrings (3) sich in einer zweiten Richtung entgegengesetzt bewegen, das hintere Gehäuse (2) in den Schutzkasten (5) durch die Öffnung auf der ersten Seite des Schutzkastens (5) eintritt.

3. Kameraanordnung nach Anspruch 1 oder 2, wobei die Kameraanordnung ferner ein Begrenzungsteil (7) umfasst und das Begrenzungsteil (7) an dem Endgerät befestigt ist; und
eine Begrenzungsführungsschiene (14) auf der Basis (1) arrangiert ist und das Begrenzungsteil (7) sich an die Begrenzungsführungsschiene (14) auf der Basis (1) anpasst.

4. Kameraanordnung nach einem der Ansprüche 1 bis 3, wobei ein Dichtungsring (6) auf einer Außenseite des Führungsrings (3) arrangiert ist.

5. Kameraanordnung nach einem der Ansprüche 1 bis 4, wobei der Übertragungsmechanismus einen Motor (41), eine Zahnradanordnung (42), eine Schraubenspindel (43) und eine Übertragungsstange (44) umfasst;
eine rotierende Welle des Motors (41) durch Verwenden der Zahnradanordnung (42) mit einem ersten Ende der Schraubenspindel (43) verbunden ist;
eine mit Gewinde versehene Führungsschiene auf der Schraubenspindel (43) arrangiert ist;
ein mit Gewinde versehenes Gleitstück an einem ersten Ende der Übertragungsstange arrangiert ist; und
das mit Gewinde versehene Gleitstück an dem ersten Ende der Übertragungsstange (44) sich an die mit Gewinde versehene Führungsschiene auf der Schraubenspindel (43) anpasst und ein zweites Ende der Übertragungsstange mit dem ersten Ende der Basis (1) fixiert verbunden ist.

6. Kameraanordnung nach Anspruch 5, wobei die Zahnradanordnung (42) ein erstes Zahnrad (421) und ein zweites Zahnrad (422) umfasst; und
das erste Zahnrad (421) auf der rotierenden Welle des Motors (41) arrangiert ist, das zweite Zahnrad (422) an dem ersten Ende der Schraubenspindel (43) arrangiert ist, und das erste Zahnrad (421) mit dem zweiten Zahnrad (422) ineinandergreift.

7. Kameraanordnung nach Anspruch 5 oder 6, wobei der Übertragungsmechanismus (4) ferner eine Begrenzungswelle (45) und eine Halterung (46) umfasst;
die Halterung (46) an dem Endgerät befestigt ist und die Begrenzungswelle (45) an der Halterung (46) befestigt ist; und
ein Begrenzungsloch auf der Übertragungsstange (44) arrangiert ist und die Begrenzungswelle in dem Begrenzungsloch der Übertragungsstange (44) gelegen ist.

8. Kameraanordnung nach einem der Ansprüche 1 bis 7, wobei die mindestens zwei Führungsschlitze einen bogenförmigen Führungsschlitz ausbilden.

9. Kameraanordnung nach einem der Ansprüche 1 bis 8, wobei eine Menge der mindestens zwei Führungsschlitze 2 ist, die mindestens zwei Führungsschlitze einen ersten Führungsschlitz (21) und einen zweiten Führungsschlitz (22) umfassen, und der eingeschlossene Winkel zwischen dem ersten Führungsschlitz (21) und dem zweiten Führungsschlitz (22) ausgebildet ist; und
der Führungspfosten (32) des Führungsrings (3) von dem ersten Führungsschlitz (21) zu dem zweiten Führungsschlitz (22) gleitet, eine Bewegungsrichtung des hinteren Gehäuses (2) sich von einer dritten Richtung zu einer vierten Richtung ändert, und ein voreingestellter eingeschlossener Winkel zwischen der dritten Richtung und der vierten Richtung ausgebildet wird.

10. Endgerät, das die Kameraanordnung nach einem der Ansprüche 1 bis 9 umfasst.

## Revendications

1. Ensemble de caméra, l'ensemble de caméra étant appliqué à un dispositif terminal, et l'ensemble de caméra comprenant un mécanisme de transmission (4), une base (1), un boîtier arrière (2) et une bague de guidage (3) ;
une première extrémité (11) de la base (1) est reliée au mécanisme de transmission (4), et une seconde extrémité (12) de la base (1) est articulée sur le boîtier arrière (2) ; le boîtier arrière (2) présente un espace pour recevoir une caméra, au moins deux fentes de guidage (21, 22) sont disposées sur le boîtier arrière (2), les au moins deux fentes de guidage sont reliées entre elles et un angle inclus est formé entre deux fentes de guidage adjacentes dans les au moins deux fentes de guidage ; et
une partie de fixation (31) et un montant de guidage (32) sont disposés sur l'anneau de guidage (3), la partie de fixation (31) est conçue pour fixer l'anneau de guidage (3) au dispositif terminal, et le montant de guidage (32) s'adapte aux au moins deux fentes de guidage,
le mécanisme de transmission (4) pouvant entraîner la base (1) et le boîtier arrière (2) pour qu'ils se déplacent par rapport à la bague de guidage (3), de sorte que le boîtier arrière (2) fait saillie hors du dispositif terminal ou se rétracte dans le terminal, dans un processus dans lequel le boîtier arrière (2) fait saillie hors du dispositif terminal, le montant de guidage (32) de l'anneau de guidage (3) se déplaçant de la première fente de guidage (21) du boîtier arrière (2) vers le seconde fente de guidage (22) du boîtier arrière (2), de sorte qu'une direction de déplacement du boîtier arrière (2) est décalée d'un angle inclus prédéfini, modifiant ainsi un angle de prise de vue d'une caméra disposée dans le boîtier arrière (2).

2. Ensemble de caméra selon la revendication 1, l'ensemble de caméra comprenant en outre un boîtier de protection (5), et le boîtier de protection (5) est fixé au dispositif terminal ;
le mécanisme de transmission (4), la base (1), le boîtier arrière (2) et la bague de guidage (3) sont tous disposés dans le boîtier de protection (5) ;
une ouverture est disposée sur un premier côté du boîtier de protection (5) ;
lorsque les au moins deux fentes de guidage du boîtier arrière et le montant de guidage (32) de la bague de guidage (3) se déplacent en sens inverse dans une première direction, le boîtier arrière (2) fait saillie hors du boîtier de protection (5) à travers l'ouverture sur le premier côté du boîtier de protection (5) ; et
lorsque les au moins deux fentes de guidage du boîtier arrière (2) et le montant de guidage (32) de la bague de guidage (3) se déplacent à l'opposé dans une deuxième direction, le boîtier arrière (2) pénètre dans le boîtier de protection (5) à travers l'ouverture sur le premier côté du boîtier de protection (5).

3. Ensemble de caméra selon la revendication 1 ou 2, l'ensemble de caméra comprenant en outre une partie de limitation (7), et la partie de limitation (7) est fixée au dispositif terminal ; et
un rail de guidage de limitation (14) est disposé sur la base (1), et la partie de limitation (7) s'adapte au rail de guidage de limitation (14) sur la base (1).

4. Ensemble de caméra selon l'une quelconque des revendications 1 à 3, une bague d'étanchéité (6) étant disposée sur un côté extérieur de la bague de guidage (3).

5. Ensemble de caméra selon l'une quelconque des revendications 1 à 4, le mécanisme de transmission comprenant un moteur (41), un ensemble d'engrenage (42), une tige à vis (43) et une tige de transmission (44) ;
un arbre rotatif du moteur (41) est relié à une première extrémité de la tige à vis (43) en utilisant l'ensemble d'engrenage (42) ;
un rail de guidage fileté est disposé sur la tige filetée (43) ;
un curseur fileté est disposé à une première extrémité de la tige de transmission ; et
le curseur fileté à la première extrémité de la tige de transmission (44) s'adapte au rail de guidage fileté sur la tige filetée (43), et une seconde extrémité de la tige de transmission est reliée de manière fixe à la première extrémité de la base (1).

6. Ensemble de caméra selon la revendication 5, l'ensemble d'engrenage (42) comprenant un premier engrenage (421) et un second engrenage (422) ; et
le premier engrenage (421) est disposé sur l'arbre rotatif du moteur (41), le second engrenage (422) est disposé à la première extrémité de la tige filetée (43) et le premier engrenage (421) est en prise avec le deuxième engrenage (422).

7. Ensemble de caméra selon la revendication 5 ou 6, le mécanisme de transmission (4) comprenant en outre un arbre de limitation (45) et un support (46) ;
le support (46) est fixé au dispositif terminal, et l'arbre de limitation (45) est fixé au support (46) ; et
un trou de limitation est disposé sur la tige de transmission (44), et l'arbre de limitation est situé dans le trou de limitation de la tige de transmission (44).

8. Ensemble de caméra selon l'une quelconque des revendications 1 à 7, les au moins deux fentes de guidage formant une fente de guidage en forme d'arc.

9. Ensemble de caméra selon l'une quelconque des revendications 1 à 8, une quantité des au moins deux fentes de guidage étant de 2, les au moins deux fentes de guidage comprennent une première fente de guidage (21) et une seconde fente de guidage (22), et l'angle inclus est formé entre la première fente de guidage (21) et la seconde fente de guidage (22) ; et
le montant de guidage (32) de la bague de guidage (3) coulisse de la première fente de guidage (21) à la seconde fente de guidage (22), une direction de déplacement du boîtier arrière (2) change d'une troisième direction à une quatrième direction, et un angle inclus prédéfini est formé entre la troisième direction et la quatrième direction.

10. Dispositif terminal, comprenant l'appareil de communication selon l'une quelconque des revendications 1 à 9.
